# DEMANDE DE BREVET EUROPEEN

(11) **EP 1 302 479 A1**
(43) Date de publication de la demande: **16.04.2003**
(21) Numéro de dépôt: 02292469.0
(22) Date de dépôt: 07.10.2002
(51) Int. Cl.: C08F 6/00, C08K 3/34, C08L 23/08

(54) **Procédé de piégeage d'un monomère résiduel à fonction époxyde dans une composition thermoplastique**

(30) Priorité: 11.10.2001 FR 0113106
(71) Demandeur: Atofina, 92800 Puteaux (FR)
(72) Inventeur: Senninger, Thierry, 57700 Hayange (FR)

(57) **Abrégé**

L'invention est relative à un procédé de piégeage d'un monomère libre n'ayant pas réagi par copolymérisation ou par greffage comprenant au moins une fonction époxyde dans une composition thermoplastique à base d'éthylène et/ou de propylène et à base d'au moins un monomère comprenant au moins une fonction époxyde, ledit procédé comprenant les étapes suivantes :
- préparation de ladite composition thermoplastique,
- addition en quantité suffisante d'un additif de piégeage solide présentant à sa surface des sites à caractère basique au sens de Lewis ou Brönsted.

L'additif de piégeage est une zéolithe poreuse dont le diamètre des pores est compris entre 5 et 15 angströms, de préférence entre 6 et 13 angströms. L'invention concerne également la composition obtenue par un tel procédé et les mélanges comprenant une telle composition.

## Description

L'invention est relative à un traitement d'un polymère thermoplastique comprenant sous forme copolymérisée ou sous forme greffée un monomère à fonction époxyde et comprenant dudit monomère à fonction époxyde sous forme libre appelé également monomère résiduel, c'est-à-dire n'ayant pas réagi par copolymérisation ou par greffage. Le traitement est destiné à capturer ledit monomère résiduel. L'invention concerne également les compositions et les mélanges comprenant de tels polymères thermoplastiques obtenus par ledit traitement.

Plusieurs techniques sont déjà bien connues dans l'industrie pour réduire la teneur en composés résiduels dans les polymères. Un dégazage peut, par exemple, être réalisé dans des silos de dégazage alimentés en azote ou en air chaud. L'élimination des composés résiduels peut également être réalisée à l'état fondu dans des appareils appelés dévolatiliseurs, comme c'est le cas dans la fabrication du polystyrène. Dans ce cas, le polymère fondu est dispersé dans une enceinte maintenue sous vide poussé, les volatils étant ainsi entraînés sous l'effet du vide. La dévolatilisation peut aussi être réalisée dans une extrudeuse munie d'un ou de plusieurs puits de dégazage.
Le document WO 98/25974 est relatif à une composition comprenant un copolymère de l'éthylène à base d'acide, tel qu'éthylène/acide (méth)acrylique. Ce copolymère est mélangé avec une zéolithe hydrophile (zéolithe ayant un rapport SiO₂/Al₂O₃ inférieur à 100, de préférence inférieur à 35 et avantageusement inférieur à 3 ; absorbant plus de 10 % d'eau à 25°C sous une pression de 4,6 Torr) de façon à former une composition dont la teneur en acide monomérique résiduel, n'ayant pas copolymérisé et compris dans le polymère, est réduite. Dans ce document, il n'est pas fait mention de monomère à fonction époxyde, ni de la couleur de la composition copolymère+zéolithe.
Le document WO 92/13029 est relatif à un procédé d'élimination de substances engendrant goûts et odeurs dans les matériaux plastiques. Les molécules responsables de ces désagréments ne sont pas divulguées. Des essais menés avec des zéolithes hydrophiles SYLOSIV® 3A et 10A produisent un faible effet en ce qui concerne l'élimination des substances responsables des goûts/odeurs, tandis que les zéolithes hydrophobes ABSCENT® donnent de bons résultats. Dans ce document, il n'est pas fait mention de monomère à fonction époxyde.
Le document WO92/13899 est relatif à un procédé d'élimination de substances engendrant goûts et odeurs dans les polyoléfines. Les molécules responsables de ces désagréments ne sont pas divulguées. Les zéolithes hydrophobes (zéolithe ayant un rapport de SiO₂/Al₂O₃ supérieur à 17, de préférence supérieur à 100 ; absorbant moins de 10 % d'eau à 25°C sous une pression de 4.6 Torr) sont préférées.

Certains composés, dont fait partie le méthacrylate de glycidyle (GMA), sont suspectés d'avoir une action toxicologique même à l'état de traces. La législation internationale tend à se durcir concernant le taux de composés résiduels dans les polymères. L'obtention de polymères comprenant des quantités infimes voir nulles de composés résiduels s'avère donc un enjeu important.
Si la technique de dégazage est totalement inefficace sur des granulés de polymère, la technique de dévolatilisation à l'état fondu est plus efficace, mais ne permet pas de diminuer de façon significative la quantité de composés résiduels. De plus, la solution consistant à implanter un appareil du type dévolatilisateur sous vide est une solution qui réclame un investissement élevé.
L'invention vise à fournir une manière techniquement simple, peu onéreuse et non toxique d'obtenir des polymères à base d'éthylène et/ou de propylène et de monomère(s) à fonction époxyde comprenant peu ou pas du tout dudit monomère à fonction époxyde résiduel. L'invention consiste à capturer ce monomère libre à l'aide d'un « piégeur » adapté à sa nature chimique, tel qu'une zéolithe, sans altérer la coloration du polymère thermoplastique.
Dans le cas où les polymères entrent dans la composition d'un emballage alimentaire (par exemple film, barquette, flacon), la capture par voie chimique et/ou physique du composé résiduel peut empêcher la mise en contact directe dudit composé avec l'aliment. Même lorsque le polymère est dilué dans une composition en vue de réaliser un emballage de forte épaisseur (> 5 mm), le composé résiduel peut migrer dans la composition pour venir en contact avec l'aliment. C'est aussi le cas lorsque le polymère entre dans la fabrication de films multicouches. L'ajout de zéolithe comme préconisée par l'invention peut donc éviter l'altération du goût de l'aliment par le composé résiduel. De plus, cette capture peut éventuellement aussi conduire à un meilleur confort olfactif.

Dans la fabrication d'une composition dans laquelle entre le polymère thermoplastique, il est également important que la zéolithe n'altère pas les propriétés physiques du polymère thermoplastique. En particulier, les propriétés optiques du polymère sont très importantes comme par exemple la transparence ou la couleur. Concernant cette dernière, il est montré à travers les exemples du présent document que certaines zéolithes ont un impact majeur sur la couleur du thermoplastique.

Les compositions thermoplastiques selon l'invention ou les mélanges comprenant de telles compositions servent à fabriquer des articles tels que par exemple des barquettes alimentaires, des films d'emballage, des flacons, des tubes entre autre, destinés à être mis en contact d'aliments sous formes solide ou liquide.

L'invention est relative à un procédé de piégeage d'un monomère libre n'ayant pas réagi par copolymérisation ou par greffage comprenant au moins une fonction époxyde dans une composition thermoplastique à base d'éthylène et/ou de propylène et à base d'au moins un monomère comprenant au moins une fonction époxyde, ledit procédé comprenant les étapes suivantes :
- préparation de ladite composition thermoplastique,
- addition en quantité suffisante d'un additif de piégeage solide présentant à sa surface des sites à caractère basique au sens de Lewis ou Brönsted.
Selon un mode de réalisation du procédé, l'additif de piégeage est une zéolithe poreuse dont le diamètre des pores est compris entre 5 et 15 angströms, de préférence entre 6 et 13 angströms.
Selon un mode de réalisation du procédé, l'additif de piégeage est une zéolithe possédant un rapport SiO₂/Al₂O₃ inférieur à 200, de préférence inférieur à 100.
Selon un mode de réalisation du procédé, la zéolithe est hydrophile, absorbant plus de 10 % d'eau à 25°C sous une pression de 4,6 torr.
Selon un mode de réalisation du procédé, la composition thermoplastique comprend :
- 50 à 95 % en poids d'éthylène et/ou de propylène,
- 0 à 40 % en poids de (méth)acrylate d'alkyle ou d'acétate de vinyle,
- 0,1 à 15 % en poids de monomère, greffé ou copolymérisé, comprenant au moins une fonction époxyde.

Selon un mode de réalisation du procédé, la composition thermoplastique comprend :
- 50 à 95 % en poids d'éthylène,
- 0 à 40 % en poids de (méth)acrylate de méthyle,
- 0,1 à 15 % en poids de méthacrylate de glycidyle greffé ou copolymérisé.

Selon un mode de réalisation du procédé, l'additif de piégeage est additionné totalement ou en partie dans la composition thermoplastique sous forme d'un mélange maître.
Selon un mode de réalisation du procédé, le mélange maître comprend 20 à 80 % en poids d'un polymère constituant la base dudit mélange maître et 80 à 20 % en poids de l'additif de piégeage.
Selon un mode de réalisation du procédé, la base du mélange maître est choisie parmi le groupe de polymères suivants : polyéthylène haute densité, polyéthylène basse densité, polyéthylène obtenu par catalyse métallocène, polypropylène, copolymère éthylène/acétate de vinyle et copolymères éthylène/(méth)acrylate d'alkyle.
L'invention est également relative à une composition thermoplastique comprenant :
- un polymère à base d'éthylène et/ou de propylène et à base d'au moins un monomère comprenant au moins une fonction époxyde, et
- un additif de piégeage de monomère résiduel comprenant au moins une fonction époxyde n'ayant pas polymérisé ou n'ayant pas été greffé dans ladite composition thermoplastique ;
- un monomère résiduel comprenant au moins une fonction époxyde n'ayant pas polymérisé ou n'ayant pas été greffé dans ladite composition thermoplastique dans une teneur comprise entre 2000 et 0 ppm.
Selon un mode de réalisation de la composition, le polymère comprend :
- 50 à 95 % en poids d'éthylène et/ou de propylène,
- 0 à 40 % en poids de (méth)acrylate d'alkyle ou d'acétate de vinyle,
- 0,1 à 15 % en poids de monomère, greffé ou copolymérisé, comprenant au moins une fonction époxyde.
Selon un mode de réalisation de la composition, le polymère comprend :
- 50 à 95 % en poids d'éthylène,
- 0 à 40 % en poids de (méth)acrylate de méthyle,
- 0,1 à 15 % en poids de méthacrylate de glycidyle greffé ou copolymérisé.
Selon un mode de réalisation de la composition, l'additif de piégeage est un solide présentant à sa surface des sites à caractère basique au sens de Lewis ou Brönsted.
Selon un mode de réalisation de la composition, l'additif de piégeage est une zéolithe poreuse dont le diamètre des pores est compris entre 5 et 15 angströms, de préférence entre 6 et 13 angströms.
Selon un mode de réalisation de la composition, l'additif de piégeage est une zéolithe possédant un rapport SiO₂/Al₂O₃ inférieur à 200, de préférence inférieur à 100.
Selon un mode de réalisation de la composition, la zéolithe est hydrophile, absorbant plus de 10 % d'eau à 25°C sous une pression de 4,6 torr.
Selon un mode de réalisation de la composition, elle comprend une teneur en monomère résiduel comprenant au moins une fonction époxyde entre 2000 et 0 ppm, entre 1000 et 0 ppm, entre 150 et 0 ppm, entre 100 et 0 ppm, entre 50 et 0 ppm ou entre 5 et 0 ppm.
Selon un mode de réalisation de la composition, elle comprend une teneur en carbonate de propylène résiduel entre 200 et 0 ppm, entre 100 et 0 ppm ou entre 50 et 0 ppm.
L'invention concerne également un mélange comprenant une composition thermoplastique telle que décrite précédemment et un polyester.
Selon un mode de réalisation du mélange, le polyester est le polyéthylène téréphtalate (PET), le polybutylène téréphtalate (PBT) ou leur mélange.
L'invention est relative à l'utilisation du mélange tel que décrit précédemment pour fabriquer des articles.
L'invention est enfin relative à un mélange maître comprenant 20 à 80 % en poids d'un copolymère pris dans le groupe comprenant le polyéthylène haute densité, le polyéthylène basse densité, le polyéthylène obtenu par catalyse métallocène, le polypropylène, le copolymère éthylène/acétate de vinyle et les copolymères éthylène/(méth)acrylate d'alkyle et 80 à 20 % en poids d'additif de piégeage présentant à sa surface des sites à caractère basique au sens de Lewis ou Brönsted.
Selon un mode de réalisation du mélange maître, l'additif de piégeage est une zéolithe poreuse dont le diamètre des pores est compris entre 5 et 15 angströms, de préférence entre 6 et 13 angströms et qui possède un rapport SiO₂/Al₂O₃ inférieur à 200, de préférence inférieur à 100.

Nous allons maintenant décrire un procédé de réduction du taux de monomères libres à fonction époxyde dans des polymères thermoplastiques. Le principe général de ce procédé consiste à ajouter à un polymère à l'état fondu, préparé selon une méthode connue de l'homme du métier, un additif susceptible d'interagir avec le monomère résiduel à fonction époxyde. Sans s'enfermer dans une explication très poussée du phénomène mis en jeu, l'additif est susceptible de capturer le composé résiduel dans des cages et/ou canaux de tailles calibrées et/ou de le piéger chimiquement. On parlera par la suite d'additif ou d'agent de piégeage. Le piégeage est mesuré à l'issue du traitement par des analyses connues de l'homme du métier. Une analyse par chromatographie en phase gazeuse a notamment été utilisée dans notre cas. Par la suite, on entendra par « composé résiduel » tout composé chimique qui est détecté dans la composition thermoplastique suite à ce type d'analyses, en particulier après l'opération d'analyse consistant à dissoudre le polymère dans un solvant, puis à le précipiter dans un non-solvant contenant un étalon interne.

Une composition thermoplastique selon l'invention comprend un polymère à base d'éthylène et/ou à base de propylène et un additif de piégeage de monomère résiduel à fonction époxyde n'ayant pas réagi par copolymérisation ou par greffage.

S'agissant des additifs de piégeage, on peut citer tout solide présentant à sa surface des sites à caractère basique au sens de Lewis ou de Brönsted. On pourra citer, à titre d'exemple, les zéolithes hydrophiles possédant un rapport SiO₂/Al₂O₃ inférieur à 200, de préférence inférieur à 100. Les zéolithes ont une structure poreuse avec des pores de diamètre compris entre 5 et 15 angströms, préférentiellement entre 6 et 13 angströms. Les zéolithes ont la capacité d'absorber plus de 10 % d'eau à 25°C et sous une pression de 4,6 Torr. A titre d'exemples, on pourra citer la zéolithe commercialisée par W.R. Grace&Co sous la dénomination Sylosiv® 10A.

S'agissant du monomère à fonction époxyde, on peut citer, à titre d'exemple:
- les esters et éthers de glycidyle aliphatiques tels que l'allyle glycidyléther, le vinyle glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

S'agissant du polymère à base d'éthylène et/ou de propylène pourra être choisi parmi les deux familles de polymères suivantes :
^{P}_{D} Les copolymères à base d'éthylène obtenus par un mécanisme de polymérisation radicalaire sous haute-pression, tel que décrit par exemple dans les documents suivants : US 2 200 429 ; 2 953 551 ; 3 350 372 ; 3 756 996. Ces copolymères pourront contenir :
   - 50 à 95 % en poids d'éthylène ;
   - 0 à 40 % en poids de (méth)acrylate d'alkyle ou d'acétate de vinyle ;
   - 0,1 à 15 % en poids de monomère à fonction époxyde, plus particulièrement l'acrylate de glycidyle ou le méthacrylate de glycidyle.
^{P}_{D} Les polymères thermoplastiques à base d'éthylène ou de propylène sur lesquels un monomère à fonction époxyde est greffé à l'aide d'une réaction de greffage radicalaire. L'opération de greffage est bien connue de l'homme du métier et peut être réalisée à l'état fondu ou bien en solution dans un solvant organique. Lorsque la réaction de greffage a lieu à l'état fondu, une extrudeuse est avantageusement utilisée pour mettre en contact le polymère thermoplastique, le monomère à fonction époxyde ainsi que la source de radicaux libres servant à initier la réaction chimique de greffage.
La teneur en monomère à fonction époxyde greffé est comprise entre 0,1 et 15 %, de préférence entre 0,1 et 5 % en poids.
Le polymère thermoplastique à base d'éthylène et/ou de propylène sur lequel est greffé le monomère à fonction époxyde sera quant à lui choisi parmi les polymères suivants :
   □ les homopolyéthylènes comme par exemple :
      - le polyéthylène basse densité (LDPE)
      - le polyéthylène haute densité (HDPE)
      - le polyéthylène linéaire basse densité (LLDPE)
      - le polyéthylène très basse densité (VLDPE)
      - le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). L'hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.
   □ les copolymères comprenant de l'éthylène et un comonomère pouvant être choisi parmi :
      - les alpha-oléfines, avantageusement celles ayant de 3 à 30 atomes de carbone ; à titre d'exemples d'alpha oléfines on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène; ces alpha-oléfines peuvent être utilisées seules ou en mélange de deux ou de plus de deux,
      - les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
      - les esters vinyliques d'acides carboxyliques saturés tels que par exemple l'acétate ou le propionate de vinyle.
      - les diènes tels que par exemple le 1,4-hexadiène.
      - le polyéthylène peut comprendre plusieurs des comonomères précédents.
   □ les homopolypropylènes
   □ les copolymères comprenant du propylène et un comonomère pouvant être choisi parmi :
      - l'éthylène
      - les diènes tels que par exemple le 1,4-hexadiène.
   □ les élastomères du type :
      - EPR (éthylène - propylène - rubber)
      - EPDM (éthylène - propylène - diène)
      - ou les mélanges de polyéthylène avec un EPR ou un EPDM

Le greffage est une opération connue en soi.

Les copolymères de l'éthylène et d'un monomère à fonction époxyde sont avantageusement des copolymères éthylène/(méth)acrylate d'alkyle/monomère à fonction époxyde obtenus par copolymérisation des monomères. Ils contiennent de 0 à 40 % en poids de (méth)acrylate d'alkyle, de préférence 5 à 35 % et jusqu'à 15 % en poids de monomère à fonction époxyde, de préférence 0,1 à 10 %.

Le monomère à fonction époxyde est avantageusement le méthacrylate de glycidyle ou GMA.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle, de préférence il s'agira de l'acrylate de butyle ou de méthyle. La quantité de (méth)acrylate d'alkyle est avantageusement de 20 à 35 % en poids. Le MFI est avantageusement compris entre 5 et 100 (en g/10 min à 190°C sous 2,16 kg), la température de fusion est comprise entre 60 et 110°C.

L'additif de piégeage de monomères libres à fonction époxyde dans la composition thermoplastique selon l'invention pourra être injecté sous forme d'additif de piégeage pur ou alors sous forme d'un mélange maître. Dans ce cas, le mélange maître comprend 20 à 80 % (en poids) d'un polymère constituant la base dudit mélange maître et 80 à 20 % (en poids) de l'additif de piégeage. On peut citer comme polymère constituant la base du mélange maître : le polyéthylène haute densité (HDPE pour High Density PE), le polyéthylène basse densité (LDPE pour Low Density PE), le polyéthylène obtenu par catalyse métallocène, le polypropylène, les copolymères de l'éthylène du type éthylène/acétate de vinyle (EVA) ou éthylène/(méth)acrylate d'alkyle (tels que par exemple les polymères éthylène/acrylate de méthyle ou éthylène/acrylate de butyle commercialisés par ATOFINA sous la marque LOTRYL®).

De préférence, lorsque le polymère à traiter est un polymère éthylène/(méth)acrylate d'alkyle/monomère à fonction époxyde, le liant du mélange maître sera choisi également parmi les copolymères de l'éthylène, du type éthylène/acétate de vinyle (EVA) ou éthylène/(méth)acrylate d'alkyle. Les copolymères éthylène/(méth)acrylate d'alkyle, notamment ceux de marque LOTRYL®, seront choisis de préférence. Concernant ces derniers, le MFI sera de préférence compris entre 5 et 20 g/10min à 190°C sous 2,16 kg.

L'additif de piégeage pur ou inclus dans un mélange maître a pour avantage de pouvoir être introduit directement dans le polymère fondu grâce à une opération de compoundage dans une extrudeuse. Il peut être injecté à tout moment, et ce, avant ou au cours de l'extrusion du polymère. Il en ressort une réelle facilité de mise en oeuvre. Le temps nécessaire pour que l'additif de piégeage puisse interagir est compris entre sensiblement 1 s à 10 min à une température comprise entre sensiblement 0°C et 250°C.
L'additif de piégeage pur ou inclus dans un mélange maître est ajouté en quantité suffisante pour réduire la quantité de monomère libre dans le polymère. Cette quantité est définie par l'homme du métier en fonction du résultat souhaité, c'est-à-dire du pourcentage de piégeage de l'époxyde libre désiré dans la composition thermoplastique selon l'invention ou bien de la teneur finale en composé résiduel désirée.

A titre d'exemple, un polymère comprenant entre 100 et 1000 ppm de monomère libre à fonction époxyde comprend entre 0 et 100 % de monomère résiduel à l'issue du traitement sachant qu'entre 0 et 10 % (en poids), de préférence entre 0 et 5 % (en poids) et avantageusement entre 0 et 2 % (en poids) de zéolithe basique pure ont été rajoutés dans ledit polymère.

Nous allons maintenant décrire plus en détail un mode de réalisation de l'invention.

### Méthode de dosage des composés résiduels dans le copolymère:

Pour les comparatifs 1-3, 7-9 et les exemples 4-6, la méthode de dosage des composés résiduels utilisée est la suivante. Dans un flacon étanche, on pèse 2 g d'échantillon de polymère que l'on dissout dans du tétrahydrofurane à froid, puis la solution obtenue est chauffée 10 minutes à 50°C. Le polymère est ensuite précipité à l'aide d'une solution de méthanol contenant du nonane comme étalon interne. Le liquide surnageant est alors injecté dans le chromatographe.

Conditions de la chromatographie en phase gazeuse (CPG) : hélium comme gaz vecteur, split comme mode d'injection, BPX5 comme type de colonne, 5 m comme longueur de colonne, 0,32 mm comme diamètre de colonne, 0,5 µm comme épaisseur de phase, 1 µl comme volume injecté, FID comme détecteur, 50 °C (6 min) puis montée de 50 à 260°C à 10°C/min comme programmation du four.

Les différents essais et comparatifs qui vont suivre ont été réalisés avec du LOTADER® AX8900 (terpolymère comprenant éthylène/acrylate de méthyle/méthacrylate de glycidyle (GMA)) commercialisé par ATOFINA ou bien pour le comparatif 9 avec du polystyrène Lacqrène® 1450N commercialisé par ATOFINA.
Les lots de LOTADER® AX8900 que nous avons utilisés comprennent entre 50 et 1000 ppm en poids de GMA libre.

### COMPARATIF 1 :

Afin de mettre en évidence le GMA libre, on place dans un tube en verre balayé par un courant d'azote (20 ml/min) une nacelle contenant des granulés de LOTADER® AX8900.

Le tube en verre est chauffé plusieurs heures (0, 4 et 8 heures) à 50°C et le courant gazeux est piégé dans de l'eau. On détermine ensuite la teneur en GMA résiduel du LOTADER® AX8900 se trouvant dans la nacelle par CPG selon la méthode décrite ci-dessus. Les résultats sont reportés dans le Tableau 1.

**Tableau 1**

| **TEMPS (en heures)** | **Concentration de GMA libre dans le copolymère (en ppm)** | **% en poids de GMA libre relargué** |
|---|---|---|
| 0 | 325 | 0 |
| 4 | 250 | 23 |
| 8 | 145 | 55 |

Le GMA dit résiduel ou libre dans le copolymère correspond au GMA monomérique n'ayant pas copolymérisé et qui reste inclus dans la masse de copolymère à température ambiante. Comme le montre le **Tableau 1**, à température constante (50°C), le pourcentage de GMA relargué augmente en fonction du temps. Au bout de 8 heures, environ la moitié du GMA résiduel est relargué.
On constate que le GMA résiduel inclus dans des granulés de LOTADER® AX8900 dégaze à une température constante de 50°C, mais lentement sur un lapse de temps de plusieurs heures.

### COMPARATIF 2 :

A l'aide d'une extrudeuse FAIREX® 45/26D à une vitesse de vis=40t/min, on extrude le copolymère LOTADER® AX8900 (composition décrite ci-dessus) selon les conditions d'extrusion suivantes. L'extrudeuse est définie en cinq zones allant de zone 1 à zone 5. La zone 5 est la plus proche de la filière de l'extrudeuse tandis que la zone 1 est la zone la plus éloignée de la filière. Dans le cas où les températures T de zones sont les suivantes : T zone 1=177°C , T zone 2=196°C, T zone 3=199°C, T zone 4=200°C, T zone 5=201°C, T filière=191°C, on constate, après analyse par CPG et selon la méthode de dosage définie ci-dessus, que le copolymère entrant dans la zone 1 a une teneur initiale de GMA résiduel de l'ordre de 177 ppm et une teneur en GMA résiduel à la sortie de la filière de l'ordre de 175 ppm.

L'extrusion seule du copolymère ne permet pas d'éliminer de façon significative le GMA résiduel dans le LOTADER® AX8900.
Des mesures ont permis de montrer qu'il en est de même pour l'acrylate de méthyle et le carbonate de propylène utilisé comme solvant : l'extrusion seule du copolymère ne permet pas d'éliminer de façon significative l'acrylate de méthyle et la carbonate de proylène résiduels.

### COMPARATIF 3

On place dans un tube en verre balayé par un courant d'azote (20 ml/min) une nacelle contenant des granulés de LOTADER® AX8900 comprenant 100 ppm de GMA libre. Le tube en verre est chauffé 24 heures à une température constante de 25°C. Au bout de 24 heures, les granulés ne présentent plus d'odeur de GMA perceptible. Cependant le dosage du GMA libre dans le copolymère révèle qu'il reste 70 ppm de GMA libre dans le copolymère.
On constate donc que même en absence d'odeur de GMA, le copolymère peut encore contenir du GMA libre en quantité non négligeable.

### EXEMPLE 4:

L'exemple 4 illustre l'invention. La même extrudeuse que celle décrite dans le comparatif 2 et les mêmes conditions d'extrusion que celles définies dans le comparatif 2 sont utilisées. La différence entre le comparatif 2 et l'exemple 4 réside dans l'injection dans l'extrudeuse, au cours de l'extrusion du copolymère LOTADER® AX8900, de 1 % en poids de zéolithe basique SYLOSIV® 10A commercialisée par W.R. Grace&Co, micronisée et hautement poreuse, avec un diamètre moyen des pores de 10 angströms. Le pH de cette zéolithe à 5 % dans l'eau mesuré selon la méthode de DIN EN ISO 787-9 est de 11,5. Le copolymère LOTADER® AX8900 et la zéolithe sont coextrudés.
On constate, après analyse par CPG et selon la méthode de dosage définie plus haut, que le copolymère entrant dans la zone 1 de l'extrudeuse a une teneur initiale en GMA libre de 70 ppm et une teneur en GMA libre à la sortie de la filière inférieure à 5 ppm.
Une analyse 1H RMN du copolymère issue de l'extrusion de l'exemple 4 a permis de montrer que la teneur en GMA copolymérisé n'est pas affectée par le traitement. Les granulés de polymère à l'issue de l'extrusion sont incolores.

### EXEMPLE 5 :

On prépare un mélange maître comprenant :
- 80 % en poids de LOTRYL® 20MA08 : copolymère éthylène/acrylate de méthyle (80/20) d'indice de fluidité abrégé MFI=8g/10 min (NFT 51-016) ; et
- 20 % en poids de zéolithe SYLOSIV® 10A définie ci-dessus. sur une extrudeuse Werner 40 à une température de 180°C.

1,37 % en poids du mélange maître est ensuite dilué dans 98,63 % en poids de LOTADER® AX8900 sur une extrudeuse Fairex® 45/26D. La teneur en zéolithe SYLOSIV® 10A dans les granulés sortant de l'extrudeuse est donc de 0,27 % en poids. La même extrudeuse que celle décrite dans le comparatif 2 et les mêmes conditions d'extrusion que celles définies dans le comparatif 2 sont utilisées.
On constate, après analyse par CPG et selon la méthode de dosage définie plus haut, que le copolymère entrant dans la zone 1 a une teneur initiale de GMA résiduel de l'ordre de 250 ppm et une teneur en GMA résiduel à la sortie de la filière de l'ordre de 26 ppm. Les granulés de polymère à l'issue de l'extrusion sont incolores.

Le dosage a été effectué également sur deux autres composés résiduels du copolymère: l'acrylate de méthyle et le carbonate de propylène utilisé comme solvant **(Tableau 2)**.

**Tableau 2**

| | **Teneurs en ppm (% restant)** | | |
|---|---|---|---|
| | **GMA** | **acrylate de méthyle** | **carbonate de propylène** |
| entrée de l'extrudeuse | 250 | 72 | 160 |
| sortie de l'extrudeuse | 26 (10%) | 62 (86%) | 40 (25%) |

On constate que la zéolithe est plus efficace sur le GMA que sur l'acrylate de méthyle, bien que ces deux composés soient de la même famille chimique des esters.

### EXEMPLE 6 :

On réalise le même essai que dans l'exemple 5, mais avec 2,75 % de mélange maître dilué dans 97,25 % en poids de LOTADER® AX8900, soit une teneur en zéolithe SYLOSIV® 10A dans les granulés sortant de l'extrudeuse de 0,55 % en poids.
On constate, après analyse par CPG et selon la méthode de dosage définie plus haut, que le copolymère entrant dans la zone 1 de l'extrudeuse a une teneur initiale en GMA libre de 250 ppm et une teneur en GMA libre à la sortie de la filière inférieure à 5 ppm. Les granulés de polymère à l'issue de l'extrusion sont incolores.
Le dosage a été effectué également sur deux autres composés résiduels du copolymère : l'acrylate de méthyle et le carbonate de propylène utilisé comme solvant **(Tableau 3)**.

**Tableau 3**

| | **Teneurs en ppm (% restant)** | | |
|---|---|---|---|
| | **GMA** | **acrylate de méthyle** | **carbonate de propylène** |
| entrée de l'extrudeuse | 250 | 72 | 160 |
| sortie de l'extrudeuse | < 5 (<2%) | 58 (80%) | < 5 (<3%) |

Les exemples 5 et 6 montrent que l'on peut abaisser la teneur en GMA libre même en présence de zéolithe basique prédispersée dans un mélange maître et que l'on peut abaisser la teneur en GMA libre en modifiant la teneur en zéolithe basique dans le polymère thermoplastique.

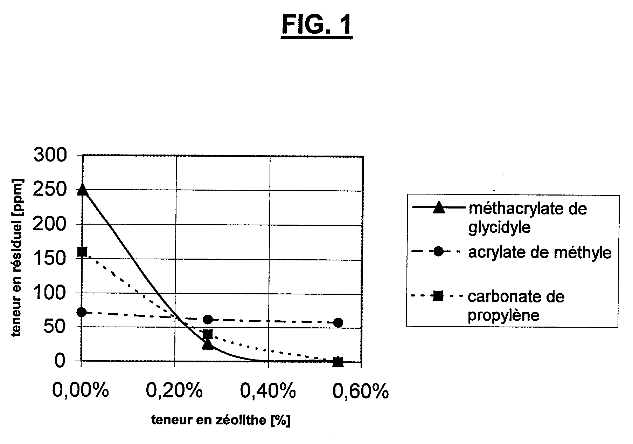

On constate que la zéolithe est bien plus efficace sur le GMA que sur l'acrylate de méthyle, bien que ces deux composés soient de la même famille chimique des esters. Pour s'en rendre compte plus précisément, nous pouvons porter la teneur en composés résiduels (en ppm) en fonction de la teneur en zéolithe (% en poids dans la composition) dans les granulés (voir figure 1). La pente de la courbe ainsi obtenue est un indicateur de l'efficacité de la zéolithe pour les différents composés résiduels. Plus la pente est négative, plus l'efficacité est grande.

**Tableau 4**

| | **GMA** | **acrylate de méthyle** | **carbonate de propylène** |
|---|---|---|---|
| **efficacité (ppm/%)** | -45230 | -2539 | -29000 |

On constate que la zéolithe présente une efficacité plus marquée pour le méthacrylate de glycidyle que pour l'acrylate de méthyle.

### COMPARATIF 7

On réalise le même essai que dans l'exemple 4, mais avec 1 % de zéolithe basique SYLOSIV 4A au lieu d'une zéolithe SYLOSIV® 10A. Cette zéolithe SYLOSIV 4A est commercialisée par W.R. Grace&Co, micronisée et hautement poreuse, avec un diamètre moyen des pores de 4 angströms. Le pH de cette zéolithe à 5 % dans l'eau mesuré selon la méthode de DIN EN ISO 787-9 est de 11,5. Le copolymère LOTADER® AX8900 et la zéolithe sont coextrudés.
On constate, après analyse par CPG et selon la méthode de dosage définie plus haut, que le copolymère entrant dans la zone 1 de l'extrudeuse a une teneur initiale en GMA libre de 55 ppm et une teneur en GMA libre à la sortie de la filière de 55 ppm. Les granulés de polymère à l'issue de l'extrusion sont incolores.

### COMPARATIF 8

On réalise le même essai que dans l'exemple 4, mais avec 1 % de zéolithe Abscents® 1000 au lieu d'une zéolithe SYLOSIV® 10A commercialisée par UOP, avec un diamètre moyen des pores >5 angströms. La zéolithe Abscents® 1000 est une zéolithe hydrophobe.
On constate, après analyse par CPG et selon la méthode de dosage définie plus haut, que le copolymère entrant dans la zone 1 de l'extrudeuse a une teneur initiale en GMA libre de 55 ppm et une teneur en GMA libre à la sortie de la filière inférieur à 5 ppm. Les granulés de polymère à l'issue de l'extrusion sont fortement colorés en brun.
Cet exemple comparatif illustre le fait qu'une zéolithe peut être efficace pour éliminer le GMA mais inutilisable à cause de la coloration qu'elle induit.

### COMPARATIF 9

On réalise le même essai que dans l'exemple 4, mais avec comme polymère du polystyrène Lacqrène® 1450N. La méthode de dosage du styrène monomère est identique à celle utilisée pour le dosage du GMA.
On constate, après analyse par CPG que le polymère entrant dans la zone 1 de l'extrudeuse a une teneur initiale en styrène libre de 250 ppm et une teneur en styrène libre à la sortie de la filière de 250 ppm. La zéolithe n'a donc eu aucun effet sur l'élimination du styrène résiduel.

**Tableau 5**

| **Essai** | **Méthode de traitement du polymère** | **% de monomère libre restant dans le polymère après son traitement** | **Coloration des granulés après le traitement** |
|---|---|---|---|
| **Comparatif 1** | Dégazage à 50 °C pendant 8 h | 45% (GMA) | pas de changement |
| **Comparatif 2** | Extrusion seule | 99% (GMA) | pas de changement |
| **Comparatif 3** | Dégazage à 25°C pendant 24 h | 70% (GMA) | pas de changement |
| **Exemple 4** | Extrusion avec zéolithe 1% SYLOSIV® 10A | <7% (GMA) | pas de changement |
| **Exemple 5** | Extrusion avec mélange maître LOTRYL® + SYLOSIV® 10A | 10% (GMA) | pas de changement |
| **Exemple 6** | Extrusion avec mélange maître LOTRYL® + SYLOSIV® 10A | <2% (GMA) | pas de changement |
| **Comparatif 7** | Extrusion avec zéolithe SYLOSIV® 4A | 100% (GMA) | pas de changement |
| **Comparatif 8** | Extrusion avec zéolithe ABSCENTS® 1000 | 9% (GMA) | forte coloration brune |
| **Comparatif 9** | Extrusion du PS avec zéolithe SYLOSIV® 10A | 100% (styrène) | pas de changement |

Le **tableau 5**, ci-dessus, permet de récapituler le % de monomère libre restant dans le polymère après traitement du polymère.

La proportion de GMA résiduel relargué dépend principalement de la température de la réaction, de la durée de la réaction, de la pression, de la quantité de GMA libre à piéger et de la quantité d'additif de piégeage introduit dans le copolymère. Concernant ce dernier point, plus on ajoutera de l'additif de piégeage, plus le GMA libre sera piégé dans le copolymère et ce jusqu'à atteindre un plateau où il ne servira plus à rien de rajouter de l'additif de piégeage car tout le GMA libre aura été piégé.

Aux vues de ces exemples et comparatifs, notre invention permet de disposer d'une zéolithe :
- capable de diminuer la teneur en GMA résiduel sans affecter la couleur du polymère (voir Exemple 4 avec Comparatif 8 et Exemple 4 avec Comparatif 7),
- efficace sur un monomère comprenant une fonction chimique donnée et pas sur un autre ne comprenant pas cette même fonction chimique (voir Exemple 4 avec GMA et Comparatif 9 avec styrène),
- efficace sur un monomère d'une certaine famille chimique mais pas aussi efficace sur un autre monomère de la même famille chimique telle que les acrylates ( voir exemple 5 et 6 avec GMA et acrylate de méthyle).
Il est donc nécessaire d'adapter finement la zéolithe au composé résiduel que l'on souhaite piéger.

## Revendications

1. Procédé de piégeage d'un monomère libre n'ayant pas réagi par copolymérisation ou par greffage comprenant au moins une fonction époxyde dans une composition thermoplastique à base d'éthylène et/ou de propylène et à base d'au moins un monomère comprenant au moins une fonction époxyde, ledit procédé comprenant les étapes suivantes :
- préparation de ladite composition thermoplastique,
- addition en quantité suffisante d'un additif de piégeage solide présentant à sa surface des sites à caractère basique au sens de Lewis ou Brönsted.

2. Procédé selon l'une des revendications 1, **caractérisé en ce que** l'additif de piégeage est une zéolithe poreuse dont le diamètre des pores est compris entre 5 et 15 angströms, de préférence entre 6 et 13 angströms.

3. Procédé selon la revendication 2, **caractérisé en ce que** l'additif de piégeage est une zéolithe possédant un rapport SiO₂/Al₂O₃ inférieur à 200, de préférence inférieur à 100.

4. Procédé selon l'une des revendications 2 ou 3, **caractérisé en ce que** la zéolithe est hydrophile, absorbant plus de 10 % d'eau à 25°C sous une pression de 4,6 torr.

5. Procédé de piégeage selon l'une des revendications précédentes, **caractérisé en ce que** la composition thermoplastique comprend :
- 50 à 95 % en poids d'éthylène et/ou de propylène,
- 0 à 40 % en poids de (méth)acrylate d'alkyle ou d'acétate de vinyle,
- 0,1 à 15 % en poids de monomère, greffé ou copolymérisé, comprenant au moins une fonction époxyde.

6. Procédé selon la revendication 5, **caractérisé en ce que** la composition thermoplastique comprend :
- 50 à 95 % en poids d'éthylène,
- 0 à 40 % en poids de (méth)acrylate de méthyle,
- 0,1 à 15 % en poids de méthacrylate de glycidyle greffé ou copolymérisé.

7. Procédé de piégeage selon l'une des revendications 1 à 4, **caractérisé en ce que** l'additif de piégeage est additionné totalement ou en partie dans la composition thermoplastique sous forme d'un mélange maître.

8. Procédé de piégeage selon la revendication 7, **caractérisé en ce que** le mélange maître comprend 20 à 80 % en poids d'un polymère constituant la base dudit mélange maître et 80 à 20 % en poids de l'additif de piégeage.

9. Procédé selon la revendication 8, **caractérisé en ce que** la base du mélange maître est choisie parmi le groupe de polymères suivants : polyéthylène haute densité, polyéthylène basse densité, polyéthylène obtenu par catalyse métallocène, polypropylène, copolymère éthylène/acétate de vinyle et copolymères éthylène/(méth)acrylate d'alkyle.

10. Composition thermoplastique comprenant :
- un polymère à base d'éthylène et/ou de propylène et à base d'au moins un monomère comprenant au moins une fonction époxyde, et
- un additif de piégeage de monomère résiduel comprenant au moins une fonction époxyde n'ayant pas polymérisé ou n'ayant pas été greffé dans ladite composition thermoplastique ;
- un monomère résiduel comprenant au moins une fonction époxyde n'ayant pas polymérisé ou n'ayant pas été greffé dans ladite composition thermoplastique dans une teneur comprise entre 2000 et 0 ppm.

11. Composition selon la revendication 10, **caractérisée en ce que** le polymère comprend :
- 50 à 95 % en poids d'éthylène et/ou de propylène,
- 0 à 40 % en poids de (méth)acrylate d'alkyle ou d'acétate de vinyle,
- 0,1 à 15 % en poids de monomère, greffé ou copolymérisé, comprenant au moins une fonction époxyde.

12. Composition selon la revendication 11, **caractérisée en ce que** le polymère comprend :
- 50 à 95 % en poids d'éthylène,
- 0 à 40 % en poids de (méth)acrylate de méthyle,
- 0,1 à 15 % en poids de méthacrylate de glycidyle greffé ou copolymérisé.

13. Composition selon l'une des revendications 10 à 12, **caractérisée en ce que** l'additif de piégeage est un solide présentant à sa surface des sites à caractère basique au sens de Lewis ou Brönsted.

14. Composition selon l'une des revendications 10 à 13, **caractérisée en ce que** l'additif de piégeage est une zéolithe poreuse dont le diamètre des pores est compris entre 5 et 15 angströms, de préférence entre 6 et 13 angströms.

15. Composition selon l'une des revendications 10 à 14, **caractérisée en ce que** l'additif de piégeage est une zéolithe possédant un rapport SiO₂/Al₂O₃ inférieur à 200, de préférence inférieur à 100.

16. Composition selon l'une des revendications 10 à 15, **caractérisée en ce que** la zéolithe est hydrophile, absorbant plus de 10 % d'eau à 25°C sous une pression de 4,6 torr.

17. Composition selon l'une des revendications 10 à 16, comprenant une teneur en monomère résiduel comprenant au moins une fonction époxyde entre 2000 et 0 ppm.

18. Composition selon l'une des revendications 10 à 16, comprenant une teneur en monomère résiduel comprenant au moins une fonction époxyde entre 1000 et 0 ppm.

19. Composition selon l'une des revendications 10 à 16, comprenant une teneur en monomère résiduel comprenant au moins une fonction époxyde entre 150 et 0 ppm.

20. Composition selon l'une des revendications 10 à 16, comprenant une teneur en monomère résiduel comprenant au moins une fonction époxyde entre 100 et 0 ppm.

21. Composition selon l'une des revendications 10 à 16, comprenant une teneur en monomère résiduel comprenant au moins une fonction époxyde entre 50 et 0 ppm.

22. Composition selon l'une des revendications 10 à 16, comprenant une teneur en monomère résiduel comprenant au moins une fonction époxyde entre 5 et 0 ppm.

23. Composition selon l'une des revendications 10 à 22, comprenant une teneur en carbonate de propylène résiduel entre 200 et 0 ppm.

24. Composition selon l'une des revendications 10 à 22, comprenant une teneur en carbonate de propylène résiduel entre 100 et 0 ppm.

25. Composition selon l'une des revendications 10 à 22, comprenant une teneur en carbonate de propylène résiduel entre 50 et 0 ppm.

26. Mélange comprenant une composition thermoplastique selon l'une des revendications 10 à 25 et un polyester.

27. Mélange selon la revendication 26, **caractérisé en ce que** le polyester est le polyéthylène téréphtalate (PET), le polybutylène téréphtalate (PBT) ou leur mélange.

28. Mélange maître comprenant 20 à 80 % en poids d'un copolymère pris dans le groupe comprenant le polyéthylène haute densité, le polyéthylène basse densité, le polyéthylène obtenu par catalyse métallocène, le polypropylène, le copolymère éthylène/acétate de vinyle et les copolymères éthylène/(méth)acrylate d'alkyle et 80 à 20 % en poids d'additif de piégeage présentant à sa surface des sites à caractère basique au sens de Lewis ou Brönsted.

29. Mélange maître selon la revendication 28, **caractérisé en ce que** l'additif de piégeage est une zéolithe poreuse dont le diamètre des pores est compris entre 5 et 15 angströms, de préférence entre 6 et 13 angströms et qui possède un rapport SiO₂/Al₂O₃ inférieur à 200, de préférence inférieur à 100.

30. Utilisation du mélange selon l'une des revendications 26 ou 27 pour fabriquer des articles.
